(19) Europäisches Patentamt
European Patent Office
Office européen des brevets

(11) Veröffentlichungsnummer: **0 016 432**
**B1**

# (12) EUROPÄISCHE PATENTSCHRIFT

(45) Veröffentlichungstag der Patentschrift: **25.11.81**

(51) Int. Cl.³: **C 09 B 1/54**, C 07 C 97/26

(21) Anmeldenummer: **80101340.0**

(22) Anmeldetag: **14.03.80**

(54) **Verfahren zur Herstellung von 1-Amino-2-phenoxy-4-hydroxy-anthrachinon.**

(30) Priorität: **19.03.79 DE 2910716**

(43) Veröffentlichungstag der Anmeldung: **01.10.80 Patentblatt 80/20**

(45) Bekanntmachung des Hinweises auf die Patenterteilung: **25.11.81 Patentblatt 81/47**

(84) Benannte Vertragsstaaten: **CH DE FR GB IT**

(56) Entgegenhaltungen:
**FR-E-43 317**
**US-A-3 715 373**
**CHEMICAL ABSTRACTS, Band 85, Nr. 3, 19. Juli 1976, Zusammenfassung Nr. 20926q, Seite 649, YA. B. SHTEINBERG, et al.: »Synthesis of phenoxy derivatives of anthraquinone in an aqueous medium«**

(73) Patentinhaber: **BASF Aktiengesellschaft, Carl-Bosch-Strasse 38, D-6700 Ludwigshafen (DE)**

(72) Erfinder: **Hiller, Heinrich, Dr., Theodor-Heuss-Strasse 11, D-6706 Wachenheim (DE)**
Erfinder: **Ellingsfeld, Heinz, Dr., Pierstrasse 9 A, D-6710 Frankenthal (DE)**
Erfinder: **Reinicke, Helmut, Dr., Veilchenweg 8, D-6718 Gruenstadt 1 (DE)**
Erfinder: **Traub, Fritz, Herzogstrasse 61, D-6730 Neustadt 14 (DE)**

**EP 0 016 432 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von 1-Amino-2-phenoxy-4-hydroxyanthrachinon

Die Erfindung betrifft ein Verfahren zur Herstellung von 1-Amino-2-phenoxy-4-hydroxyanthrachinon in wäßrigem Medium.

1-Amino-2-phenoxy-4-hydroxyanthrachinon ist ein bedeutender Dispersionsfarbstoff für das Färben von Fasermaterial aus linearen Polyestern. Das Anthrachinonderivat ist außerdem ein wichtiges Zwischenprodukt zur Herstellung von weiteren Dispersionsfarbstoffen.

Die Herstellung von 1-Amino-2-phenoxy-4-hydroxyanthrachinon wird in zahlreichen Patentschriften beschrieben. So wird z. B. in der FR-PS 1 478 768, Beispiel 3, die Reaktion von 1-Amino-2-brom-4-hydroxyanthrachinon in Phenol mit Kaliumcarbonat bei 120° C beschrieben. Hierbei dient Phenol sowohl als Reaktionskomponente als auch als Lösungsmittel. In der FR-PS 1 477 434 und der DE-OS 1 444 761 werden als Lösungsmittel Carbonsäureamide, z. B. Dimethylformamid und in der JP-OS 1973/37432 Dimethylsulfoxid als Lösungsmittel für die gleiche Reaktion genannt.

Die mit Lösungsmittel arbeitenden Verfahren haben den Nachteil, daß bei der Isolierung des Umsetzungsproduktes zur Verhinderung von umweltschädigenden Einflüssen besondere Maßnahmen getroffen und die Lösungsmittel aus dem Filtrat zurückgewonnen werden müssen. Hierdurch fallen zusätzliche Kosten an.

In Zh. Prikl. Khim. 49 (1976) 4, 904 bis 905 wird von Ya. B. Shteinberg und S. S. Tkachenko ein Verfahren zur Herstellung von 1-Amino-2-phenoxy-4-hydroxyanthrachinon in wäßrigem Medium beschrieben. Danach wird 1-Amino-2-brom-4-hydroxyanthrachinon mit Phenol in wäßrigem Kaliumhydroxid in Gegenwart von Dispergiermitteln bei 150° C umgesetzt. Als Ausbeute werden von den Autoren 87 bis 90% angegeben. Beim Nacharbeiten mit verschiedenen Dispergiermitteln konnte kein als Farbstoff brauchbares Phenoxyanthrachinonderivat erhalten werden. Der Gehalt der Verfahrensprodukte an 1-Amino-2-phenoxy-4-hydroxyanthrachinon lag in allen Fällen unterhalb 80%.

Aufgabe der vorliegenden Erfindung war es, ein Verfahren zu entwickeln, nach dem 1-Amino-2-phenoxy-4-hydroxyanthrachinon in wäßrigem Medium in hoher Ausbeute und in einer Reinheit, wie sie für die Anwendung als Dispersionsfarbstoff erforderlich ist, hergestellt werden kann. Eine weitere Aufgabe war, daß das Verfahren umweltfreundlich sein sollte.

Es wurde gefunden, daß man 1-Amino-2-phenoxy-4-hydroxyanthrachinon, das im Phenoxy gegebenenfalls durch Chlor, Brom, $C_1$- bis $C_4$-Alkyl und/oder $C_1$- bis $C_4$-Alkoxy substituiert ist, durch Umsetzen von 1-Amino-2-halogen-4-hydroxyanthrachinon mit dem entsprechenden Phenol in wäßrig-alkalischem Medium erhält, wenn man 1-Amino-2-chlor-4-hydroxyanthrachinon in Form einer wäßrigen Suspension bei pH-Werten von 9 bis 13 und Temperaturen zwischen 120 und 150° C mit dem Phenol in Gegenwart eines Phasentransferkatalysators umsetzt, wobei man als Phasentransferkatalysator

a) Ammoniumsalze der Formel

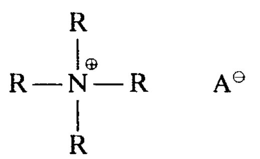

in der mindestens ein R für lineares oder verzweigtes $C_4$- bis $C_{20}$-Alkyl und/oder $C_7$- bis $C_{10}$-Phenylalkyl, die restlichen R für $C_1$- bis $C_4$-Alkyl, wobei eines der restlichen R auch Phenyl bedeuten kann, oder $R_3N$ für die Pyridiniumgruppe und A für ein Äquivalent eines Anions stehen;

b) Äthylenoxid/Propylenoxid-Blockcopolymere, die

α) durch Umsetzen von Hydroxylverbindungen der allgemeinen Formel $A(OH)_m$ (II), in der A ein m-wertiger aliphatischer Rest mit 2 bis 6 C-Atomen, OH primäres oder sekundäres Hydroxyl und m = 2 bis 4 bedeuten, mit 2 bis 40 Mol Propylenoxid je Äquivalent Hydroxyl und folgender Umsetzung mit 2 bis 40 Mol Äthylenoxid je Äquivalent Oxpropylierungsprodukt, oder

β) durch Umsetzen von Aminen der allgemeinen Formel

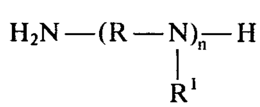 (III)

in der R ein gesättigtes lineares oder verzweigtes $C_2$- bis $C_6$-Alkylen, $R^1$ = Wasserstoff, Methyl oder Phenyl und n = 1 bis 5 bedeuten, mit 2 bis 40 Mol Propylenoxid je Äquivalent reaktionsfähigem Aminowasserstoff und folgender Umsetzung mit 2 bis 40 Mol Äthylenoxid je Äquivalent Oxpropylierungsprodukt erhalten werden, oder

c) Umsetzungsprodukte von $C_2$- Hydroxylverbindungen $C_{20}$-Alkylphenolen, von $C_{12}$- bis $C_{20}$-Alkenylaminen, von $C_{12}$- bis $C_{20}$-Alkylaminen oder $C_8$- bis $C_{20}$-Alkanolen mit 3 bis 30 primäres Äthylenoxid je Mol Hydroxy- oder Aminoverbindung verwendet.

Nach dem Verfahren gemäß der Erfindung erhält man 1-Amino-2-phenoxy-4-hydroxyanthrachinon in hoher Ausbeute und gleichzeitig hervorragender Qualität. Das Verfahrensprodukt ist für coloristische Zwecke gut geeignet. Bei dem Verfahren werden Ausbeuten von bis zu 98% der Theorie erzielt. Die Verfahrensprodukte weisen Reingehalte von 84% und darüber auf.

Das Verfahren wird so durchgeführt, daß man die wäßrige Suspension, die den Phasentransferkatalysator 1-Amino-2-chlor-4-hydroxyanthrachinon und das Phenol enthält und die einen pH-Wert im Bereich von 9 bis 13 aufweist, unter Rühren auf Temperaturen zwischen 120 und 150°C erwärmt, und bei der gewünschten Reaktionstemperatur hält, wobei der pH-Wert in der wäßrigen Phase im Bereich von 9 bis 13 gehalten wird. Nach der Beendigung der Reaktion wird das auf 80 bis 90°C abgekühlte Reaktionsgemisch mit warmem Wasser auf das 1,5- bis 3fache Volumen verdünnt und 0,5 bis 5 Stunden bei 50 bis 80°C nachgerührt. Das 1-Amino-2-phenoxy-4-hydroxyanthrachinon wird aus der Suspension in üblicher Weise abgetrennt, z. B. durch Filtrieren oder Zentrifugieren, mit heißem Wasser hell und neutral gewaschen und getrocknet.

Der pH-Wert in der Suspension kann durch Zugabe von Basen, wie Alkalimetallhydroxide, Alkalimetallcarbonate zu der Suspension eingestellt werden. Da bei der Reaktion Base verbraucht wird, muß im Falle der Anwendung von Alkalimetallhydroxid der pH-Wert in der Suspension durch Zugeben von Natron- oder Kalilauge zwischen 9 und 13 gehalten werden. Der Zusatz kann in kleinen Portionen oder kontinuierlich erfolgen.

Vorteilhafterweise verwendet man zur Einstellung des pH-Wertes Puffersubstanzen wie Natriumcarbonat, vorzugsweise Kaliumcarbonat oder Kaliumphosphat. Als Puffer ist Kaliumphosphat besonders geeignet. Die Menge an Puffersubstanz kann so bemessen werden, daß der pH-Wert während der gesamten Umsetzung im gewünschten pH-Bereich bleibt. Verwendet man geringere Mengen an Puffer, dann wird die Suspension während der Reaktion durch Zugeben von Natron- oder Kalilauge nachgestellt. Die Umsetzung erfolgt vorzugsweise im pH-Bereich von 10 bis 12, insbesondere von pH 11 bis 12.

Die Reaktionstemperatur liegt zwischen 120 und 150°C, vorzugsweise zwischen 130 und 150°C. Bei Temperaturen unterhalb 120°C sind — wegen der geringeren Reaktionsgeschwindigkeit — lange Reaktionszeiten erforderlich, so daß niedrige Raum-Zeit-Ausbeuten resultieren. Man kann die Umsetzung auch bei Temperaturen oberhalb 150°C durchführen, jedoch wird bei Temperaturen oberhalb 160°C bereits ein deutlich schlechteres Verfahrensprodukt als bei 140 bis 150°C erhalten.

Als Phenole kommen die gleichen in Betracht wie bei den Verfahren des Standes der Technik: z. B. 2- und 4-Chlorphenol, 4-Bromphenol, 2-, 3- und 4-Kresol, die Xylenole, 4-Äthylphenol, 4-Isopropylphernol, 4-tert.-Butylphenol und vortzugsweise Phenol.

Das Verhältnis zu 1-Amino-2-chlor-4-hydroxyanthrachinon beträgt mindestens 1 : 1 Mol, vorzugsweise 1 : 1,5 bis 1 : 3 Mol. Dabei ist die für ein optimales Ergebnis erforderliche Menge an Phenol von der Reinheit des verwendeten 1-Amino-2-chlor-4-hydroxyanthrachinons abhängig. Bei weniger reinem 1-Amino-2-Chlor-4-hydroxyanthrachinon wendet man vorteilhafterweise etwa 2,5 bis 3 Mol des Phenols je Mol Anthrachinonderivat an.

Damit eine rasche Umsetzung erreicht wird, erfolgt die Reaktion zweckmäßigerweise in Gegenwart von Dispergiermitteln, insbesondere von anionaktiven Dispergiermitteln wie Kondensationsprodukte aus Naphthalin-2-sulfonsäure und/oder Mono- oder Di-$C_1$- bis $C_8$-Alkylnaphthalin-2-sulfonsäure mit Formaldehyd, $C_4$- bis $C_{20}$-Alkylbenzolsulfonsäure in Form der Ammonium- oder Alkalimetallsalze. Die Anwendung von anionischen Dispergiermitteln ist vor allem dann von Vorteil, wenn das als Ausgangsstoff verwendete 1-Amino-2-chlor-4-hydroxyanthrachinon einen Reingehalt von unterhalb 95% aufweist. In diesen Fällen erhält man bei der Umsetzung in Gegenwart der anionischen Dispergiermittel ein reineres Verfahrensprodukt als in Abwesenheit der Dispergiermittel. Bei reinem 1-Amino-2-chlor-4-hydroxyanthrachinon, d. h. wenn der Reingehalt etwa 95% und darüber beträgt ist das anionische Dispergiermittel nicht mehr erforderlich, jedoch auch nicht nachteilig. Zweckmäßigerweise wird man bei weniger reinem Ausgangsstoff mehr anionisches Dispergiermittel anwenden als bei reinerem Ausgangsstoff. In der Regel wird man etwa 2 bis 10, vorzugsweise etwa 3 bis 8 Gew.-%, bezogen auf 1-Amino-2-chlor-4-hydroxyanthrachinon, an anionischem Dispergiermittel anwenden.

Erfindungswesentlich ist, daß die Umsetzung in Gegenwart von Phasentransferkatalysatoren erfolgt. Diese Katalysatoren haben die Eigenschaft, die zwischen fester und flüssiger Phase ablaufende Reaktion in eine Reaktion in quasihomogener Phase umzuwandeln.

Als Phasentransferkatalysatoren kommen für das Verfahren gemäß der Erfindung in Betracht:

a) Ammoniumsalze der Formel

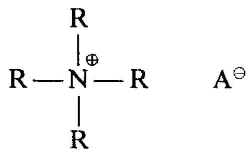

(I)

in der mindestens ein R für lineares oder verzweigtes $C_4$- bis $C_{20}$-Alkyl oder $C_7$- bis $C_{20}$-Phenylalkyl, die restlichen R für $C_1$- bis $C_4$-Alkyl, wobei eines der restlichen R auch Phenyl bedeuten kann, oder $R_3N^{\oplus}$- für die Pyridiniumgruppe und $A^{\ominus}$ für ein Äquivalent eines Anions stehen;

b) Äthylenoxid/Propylenoxid-Blockcopolymere, die

$\alpha$) durch Umsetzen von Hydroxylverbindungen der allgemeinen Formel $A(OH)_m$ (II), in der A ein m-wertiger aliphatischer Rest mit 2 bis 6 C-Atomen, OH primäres oder sekundäres Hydroxyl und m = 2 bis 4 bedeuten, mit 2 bis 40 Mol Propylenoxid je Äquivalent Hydroxyl und folgender Umsetzung mit 2 bis 40 Mol Äthylenoxid je Äquivalent Oxpropylierungsprodukt, oder

$\beta$) durch Umsetzen von Aminen der allgemeinen Formel

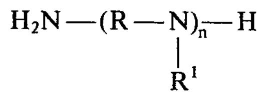

(III)

in der R ein gesättigtes, lineares oder verzweigtes $C_2$- bis $C_6$-Alkylen, $R^1$ = Wasserstoff, Methyl oder Phenyl und n = 1 bis 5 bedeuten, mit 2 bis 40 Mol Propylenoxid je Äquivalent reaktionsfähigem Aminowasserstoff und folgender Umsetzung mit 2 bis 40 Mol Äthylenoxid je Äquivalent Oxpropylierungsprodukt erhalten werden, oder

c) Umsetzungsporodukte von $C_2$- bis $C_{20}$-Alkylphenolen, von $C_{12}$- bis $C_{20}$-Alkylaminen oder $C_8$- bis $C_{20}$-Alkanolen mit 3 bis 30 Mol Äthylenoxid je Mol Hydroxy- oder Aminoverbindung.

Als quartiäre Ammoniumsalze (a) sind z. B. folgende Gruppen besonders zu nennen:

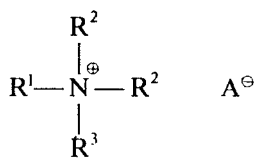

(Ia)

worin $R^1$ $C_4$- bis $C_{20}$-, vorzugsweise $C_8$- bis $C_{20}$-Alkyl und $R^2$ und $R^3$ je $C_1$- bis $C_4$-Alkyl, vorzugsweise Methyl; oder $R^1$ und $R^3$ je $C_8$- bis $C_{20}$-Alkyl und $R^2$ $C_1$- bis $C_4$-Alkyl, vorzugsweise Methyl; oder $R^1$ $C_7$- bis $C_{10}$-Phenalkyl, $R^2$ $C_1$- bis $C_4$-Alkyl, vorzugsweise Methyl und $R^3$ Phenyl oder $C_1$- bis $C_{20}$-Alkyl; oder $R^1$ $C_8$- bis $C_{20}$-Alkyl oder $C_7$- bis $C_{10}$-Phenalkyl und

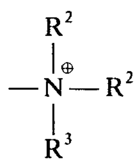

Pyridinium bedeuten.

Im einzelnen sind z. B. als Kationen für a) zu nennen:

Octadecyltrimethylammonium, Hexadecyl-trimethylammonium, Tetradecyl-trimethylammonium, Dodecyl-trimethylammonium, Decyl-trimethylammonium, sowie die Ammoniumionen, die anstelle von Trimethyl, Triäthyl, Tripropyl oder Tributyl enthalten; Dioctadecyl-dimethylammonium, Dihexadecyl-dimethylammonium, Ditetradecyl-dimethylammonium, Didodecyldimethylammonium, Didecyl-Dimethylammonium, Dioctyldimethylammonium, sowie die Ammoniumionen, die anstelle von Dimethyl, Diäthyl, Dipropyl oder Dibutyl enthalten; Trimethylbenzylammonium, Triäthylbenzylammonium, Tripropyl- und Tributylbenzylammonium, Tetra-n-butylammonium, Cetyltrimethylammonium, Cetyldimethylbenzylammonium, Distearyldimethylammonium, Lauryldimethylbenzylammonium, N-Benzylpyridinium, N-Hexadecylpyridinium, N-Stearylpyridinium, N-Octylpyridinium, Tetradecylpyridinium, Dodecylpyridinium, Decylpyridinium.

Als Katalysatoren aus der Gruppe (b) kommen z. B. in Betracht:

($\alpha$) Umsetzungsprodukte von Äthylenglykol, Propylenglykol, Butandiol-1,2, -1,3 und -1,4 Pentandiol und Hexandiol-1,6, Glycerin, Butantriol, Trimethylolpropan, Pentaerythrit, mit 2 bis 40 Mol Propylenoxid je Äquivalent OH-Gruppe und 2 bis 40 Mol Äthylenoxid (ÄO) je Äquivalent Oxypropylierungsprodukt.

($\beta$) Umsetzungsprodukt von Di- und Polyaminen der Formel (III), wie Äthylendiamin, Diäthylentriamin, Triäthylentetramin, N-(2-Aminoäthyl)-N-methyläthylendiamin, Propylendiamin, Dipropylentriamin, Butylendiamin und Hexamethylendiamin mit 2 bis 40 Mol Propylenoxid je Äquivalent Aminowasserstoff und mit 2 bis 40 Mol Äthylenoxid je Äquivalent Oxpropylierungsprodukt.

Als Vertreter der Gruppe (c) sind z. B. im einzelnen zu nennen: Oxäthylierungsprodukte aus Oleylamin, Stearylamin, Octadecanol, Hexadecanol, Tetradecanol, Dodecanol, $C_9$- bis $C_{11}$-Oxoalkoholgemisch, $C_{11}$- bis $C_{14}$-Oxoalkoholgemisch und $C_{12}$-/$C_{16}$-Alkanolgemisch und je 2 bis 40 Mol ÄO; 4-Äthylphenyl, 4-sec.Butylphenyl, 4-Hexylphenol, 4-Octylphenyl, 4-Nonylphenol, 4-Decylphenol, 4-Dodecylphenyl, 4-Tridecylphenol, 4-Tetradecylphenol, 4-Hexadecylphenol, 4-Octadecylphenol und 5 bis 30 Mol, vorzugsweise 10 bis 20 Mol ÄO je Mol Phenol.

Umsetzungsprodukte von 4-Nonylphenol mit 10 bis 20 Mol ÄO je Mol Phenol, von 1 Mol Propylenglykol mit 25 bis 35 Mol Propylenoxid und dann mit 15 bis 25 Mol ÄO; Trimethylbenzylammoniumchlorid, Dimethylbenzylphenylammoniumchlorid, Cetyltrimethylammoniumchloirid oder andere Salze dieser Ammoniumverbindungen sind als Phasentransferkatalysatoren bevorzugt.

Besonders bevorzugt sind als Transferkatalysatoren für das erfindungsgemäße Verfahren Trimethylbenzylammoniumsalze und Umsetzungsprodukte von 1 Mol 4-Nonylphenol mit 12 bis 17 Mol ÄO.

Die anzuwendende Menge an Transferkatalysator hängt von der Reinheit der als Ausgangsstoff verwendeten 1-Amino-2-chlor-4-hydroxyanthrachinons ab. Die Menge an a), b) oder c) liegt im allgemeinen zwischen 1 und 20 Gew.-%, bezogen auf 1-Amino-2-chlor-4-hydroxyanthrachinon, vorzugsweise zwischen 1 und 10 Gew.-%.

Die Reinheit des Verfahrensproduktes kann erhöht werden, wenn das warme Reaktionsgemisch in warme, verdünnte Sodalösung ausgetragen und diese Mischung in der Wärme nachgerührt wird. Als verdünnte Sodalösung wendet man eine 2 bis 15, vorzugsweise 5 bis 10, insbesondere 7 bis 10 Gewichtsprozent Soda enthaltende wäßrige Lösung an. Die Menge kann bis zum 3fachen des Reaktionsgemisches betragen. Vorteilhafterweise wendet man das 0,75 bis 1fache des Volumens des Reaktionsgemisches an.

Ein weiterer Reinigungseffekt wird erzielt, wenn die wäßrige Suspension umgepumpt wird, wobei die größeren Kristalle des 1-Amino-2-phenoxy-4-hydroxyanthrachinons zerkleinert werden. Für diesen Zweck haben sich Mahlpumpen (®Gorator) besonders bewährt.

Die folgenden Ausführungsbeispiele sollen das Verfahren weiter erläutern. Die im folgenden genannten Teile und Prozentangaben beziehen sich auf das Gewicht.

## Beispiel 1

In 200 Teilen Wasser werden 91 Teile technische 50%ige Kalilauge und 35 Teile technische 75%ige Phosphorsäure gelöst (pH 11,5). Nun werden 60 Teile Phenol, 3,5 Teile des Kondensationsproduktes von Naphthalin-2-sulfonsäure und Formaldehyd (Natriumsalz) als Dispergiermittel, 7 Teile einer 50%igen wäßrigen Lösung von Trimethylbenzylammoniumchlorid und 70 Teile 1-Amino-2-chlor-4-hydroxyanthrachinon (Reingehalt: 88%; säulenchromatografisch/photometrisch bestimmt) zugegeben und die Suspension 15 Std. unter Rühren auf 140° C erhitzt (Druck 3,5 bar). Nach Abkühlen auf 80 bis 90° C gießt man den ausreagierten Ansatz in 350 Teile 10%ige Sodalösung, rührt 1 Stunde bei 70° C nach und pumpt dabei die Suspension mittels einer Mahlpumpe im Kreis. Anschließend wird filtriert, mit heißem Wasser hell und neutral gewaschen und getrocknet. Man erhält 75,3 Teile 1-Amino-2-phenoxy-4-hydroxyanthrachinon; Reingehalt: 97% (säulenchromatografisch/photometrisch bestimmt) entsprechend einer Ausbeute von 98% der Theorie. Das Produkt färbt Polyester im Vergleich zu dem Produkt des Standes der Technik (aus 1-Amino-2-brom-4-hydroxyanthrachinon im Phenol in Gegenwart von Phenolat hergestellt) reiner und gelber.

## Biespiele 2 bis 13

Man verfährt wie im Beispiel 1 angegeben, wendet jedoch anstelle von 3,5 Teilen Trimethylbenzylammoniumchlorid je 3,5 Teile der in der folgenden Tabelle angegebenen Katalysatoren an. Man erhält das Verfahrensprodukt in der in Spalte 2 angegebenen Menge mit dem genannten Reingehalt. In Spalte 4 ist außerdem der coloristische Vergleich zum Stand der Technik angegeben.

Tabelle

| Beisp. | Katalysator | Ausbeute Teile | Reingehalt % | Farbton im Vergleich zum Stand d. Technik |
|---|---|---|---|---|
| 2 | Blockpolymerisat von p-Nonylphenol mit 14 Äthylenoxid | 72 | 95 | reiner, gelber |
| 3 | Cetyltrimethylammoniumchlorid | 76 | 88 | reiner, gelber |
| 4 | Distearyldimethylammoniumchlorid | 75 | 87 | gleich |
| 5 | Dimethylbenzylphenylammoniumchlorid | 78 | 90 | reiner, gelber |
| 6 | Benzylpyridiniumchlorid | 77 | 84 | gleich |
| 7 | Propylenglykol + 17 Mol PO + 3 Mol ÄO*) | 77 | 88 | reiner, gelber |
| 8 | Propylenglykol + 30 Mol PO + 17 Mol ÄO*) | 76 | 87 | reiner, gelber |
| 9 | Äthylendiamin + 17 Mol PO + 28 Mol ÄO*) | 78 | 86 | reiner, gelber |
| 10 | Oleylamin + 12 Mol ÄO | 79 | 86 | reiner, gelber |
| 11 | Kokosfettalkohol + 8 Mol ÄO | 77 | 85 | gleich |
| 12 | $C_9$-/$C_{11}$-Oxoalkohol + 5 Mol ÄO | 79 | 84 | gleich |
| 13 | Propylenglykol + 31 Mol PO + 30 Mol ÄO*) | 79 | 84 | gleich |

ÄO = Äthylenoxid.
PO = Propylenoxid.
*) = Die Umsetzung erfolgte in der angegebenen Reihenfolge.

Beispiel 14

In 250 Teile Wasser werden 35 Teile Kaliumcarbonat, 65 Teile p-Chlorphenol, 4 Teile einer 50%igen wäßrigen Lösung von Dodecylbenzolsulfonat-Diäthanolaminsalz als Dispergiermittel, 7 Teile einer 50%igen wäßrigen Lösung von Trimethylbenzylammoniumchlorid und 70 Teile 1-Amino-2-chlor-4-hydroxyanthrachinon (Reingehalt: 95%) eingetragen (pH 11) und das Gemisch unter Rühren 15 Stunden auf 140°C erhitzt (Druck ca. 4,5 bar). Nach Abkühlen gießt man das Reaktionsgemisch in 350 Teile 10%ßige Sodalösung, rührt 1 Stunde bei 70°C nach und filtriert die Suspension. Nach dem Neutralwaschen und Trocknen erhält man 88 Teile 1-Amino-2-(4'-chlorphenoxy)-4-hydroxyanthrachinon mit einem Reingehalt von 97%, entsprechend einer Ausbeute von 97% der Theorie.

Zum Vergleich wurde in den folgenden Beispielen das Verfahren von Shteinerg und Tkachenko überprüft:

Vergleichsbeispiel I

Nacharbeitung des in Zh. Prikl. Khim. 49 (1976) 4, s. 905/04 beschriebenen Verfahrens.

In 200 Teilen Wasser werden 50 Teile 50%ige Kalilauge, 60 Teile Phenol, 4 Teile des Kondensationsproduktes von Naphthalin-2-sulfonsäure und Formaldehyd (Natriumsalz) als Netzmittel und 70 Teile 1-Amino-2-brom-4-hydroxyanthrachinon (Reingehalt: 94%) 15 Stunden auf 150°C erhitzt (Druck ca. 4,5 bar). Nach dem Abkühlen auf 80 bis 90°C wird das Reaktionsgemisch in 350 Teile 10%ige Sodalösung eingegossen, 1 Stunde bei 70°C nachgerührt, wobei die Suspension mittels einer Mahlpumpe im Kreis gepumpt wird; anschließend wird filtriert, mit heißem Wasser hell und neutral gewaschen und getrocknet. Man erhält 69 Teile Verfahrensprodukt das einen Reingehalt von 79% aufweist. Dies entspricht einer Ausbeute von 80% der Theorie. Das Produkt färbt Polyester sehr viel trüber und blauer als das Produkt des Standes der Technik. Das Produkt ist für Färbezwecke nicht brauchbar.

### Vergleichsbeispiel II

Es wird wie im Vergleichsbeispiel I verfahren, jedoch werden als Dispergiermittel 4 Teile einer 50%igen Lösung von Dodecylbenzolsulfonsäure-Diäthanolaminsalz angewendet. Ausbeute: 69 Teile mit einem Reingehalt von 80%. Auch dieses Produkt ist für Färbezwecke nicht brauchbar.

### Vergleichsbeispiel III

Man verfährt wie im Beispiel 1, verwendet jedoch anstelle von 1-Amino-2-chlor-4-hydroxyanthrachinon die äquimolare Menge (76 Teile) 1-Amino-2-brom-4-hydroxyanthrachinon (Reingehalt: 94%). Man erhält 77 Teile Verfahrensprodukt mit einem Reingehalt von 91%, entsprechend einer Ausbeute von 94% der Theorie. Überraschend färbt das Produkt trotz des verhältnismäßig hohen Reingehalts im Vergleich zum Produkt des Standes der Technik sehr viel trüber und blauer und ist daher für Färbezwecke nicht brauchbar.

**Patentansprüche**

1. Verfahren zur Herstellung von 1-Amino-4-hydroxy-2-phenoxyanthrachinon, das im Phenoxy gegebenenfalls durch Chlor, Brom, $C_1$ — bis $C_4$-Alkyl und/oder $C_1$- bis $C_4$-Alkoxy substituiert ist, durch Umsetzen von 1-Amino-2-halogen-4-hydroxyanthrachinon mit dem entsprechenden Phenol in wäßrig-alkalischem Medium in der Wärme, dadurch gekennzeichnet, daß man 1-Amino-2-chlor-4-hydroxyanthrachinon in Form einer wäßrigen Suspension bei pH-Werten von 9 bis 13 und Temperaturen zwischen 120 und 150°C mit dem Phenol in Gegenwart eines Phasentransferkatalysators umsetzt, wobei man als Phasentransferkatalysator

a) Ammoniumsalze der Formel

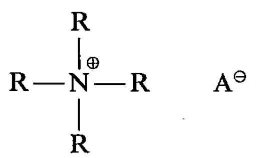

in der mindestens ein R für lineares oder verzweigtes $C_4$- bis $C_{20}$-Alkyl oder $C_7$- bis $C_{10}$-Phenylalkyl, die restlichen R für $C_1$- bis $C_4$-Alkyl, wobei eines der restlichen R auch Phenyl bedeuten kann, oder $R_3N^{\oplus}$- für die Pyridiniumgruppe und $A^{\ominus}$ für ein Äquivalent eines Anions stehen;

b) Äthylenoxid/Propylenoxid-Blockcopolymere, die

α) durch Umsetzen von Hydroxylverbindungen der allgemeinen Formel $A(OH)_m$, in der A ein m-wertiger aliphatischer Rest mit 2 bis 6 C-Atomen, OH primäres oder sekundäres Hydroxyl und m = 2 bis 4 bedeuten, mit 2 bis 40 Mol Propylenoxid je Äquivalent Hydroxyl und folgender Umsetzung mit 2 bis 40 Mol Äthylenoxid je Äquivalent Oxpropylierungsprodukt, oder

β) durch Umsetzen von Aminen der allgemeinen Formel

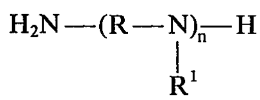

in der R ein gesättiges, lineares oder verzweigtes $C_2$- bis $C_6$-Alkylen, $R^1$ = Wasserstoff, Methyl oder Phenyl und n = 1 bis 5 bedeuten, mit 2 bis 40 Mol Propylenoxid je Äquivalent reaktionsfähigem Aminowasserstoff und folgender Umsetzung mit 2 bis 40 Mol Äthylenoxid in Äquivalent Oxpropylierungsprodukt erhalten werden, oder

c) Umsetzungsprodukte von $C_2$- bis $C_{20}$-Alkylphenolen von $C_{12}$- bis $C_{20}$-Alkylaminen, von $C_{12}$- bis $C_{20}$-Alkylaminen oder $C_8$- bis $C_{20}$-Alkanolen mit 3 bis 30 Mol Äthylenoxid je Mol Hydroxy- oder Aminoverbindung verwendet.

2. Verfahren gemäß Anspruch 1, dadurch gekennzeichnet, daß die Umsetzung in Gegenwart von 1 bis 20 Gew.-%, bezogen auf 1-Amino-2-chlor-4-hydroxyanthrachinon, das Phasentransferkatalysators a), b) oder c) erfolgt.

3. Verfahren gemäß dem Anspruch 1 oder 2, dadurch gekennzeichnet, daß die Umsetzung im pH-Bereich von 10 bis 12 erfolgt.

4. Verfahren gemäß dem Anspruch 1 oder 2, dadurch gekennzeichnet, daß die Umsetzung im pH-Bereich von 11 bis 12 erfolgt.

5. Verfahren gemäß dem Anspruch 1, 2, 3 oder 4, dadurch gekennzeichnet, daß die Umsetzung im Temperaturbereich zwischen 130 und 150°C erfolgt.

6. Verfahren gemäß den Ansprüchen 1 bis 5, dadurch gekennzeichnet, daß die Umsetzung in Gegenwart von Salzen des Trimethylbenzylammonoiums, des Dimethylbenzylphenylammoniums, des Cetyltrimethylammoniums oder von Umsetzungsprodukten des 4-Nonylphenols mit 10 bis 20 Mol ÄO je Mol Phenol, des Propylenglykols mit 25 bis 35 Mol Propylenoxid und dann mit 15 bis 25 Mol Äthylenoxid je Mol Glykol erfolgt.

7. Verfahren gemäß den Ansprüchen 1 bis 5, dadurch gekennzeichnet, daß die Umsetzung in Gegenwart des Umsetzungsproduktes von 4-Nonylphenol mit Äthylenoxid (1 : 12 bis 17 Mol) erfolgt.

**Claims**

1. A process for the preparation of 1-amino-4-hydroxy-2-phenoxyanthraquinone, where phenoxy is unsubstituted or substituted by chlorine, bromine, $C_1-C_4$-alkyl and/or $C_1-C_4$-alkoxy, by reacting a 1-amino-2-halo-4-hydroxyanthraquinone with the corresponding phenol in an aqueous alkaline medium at an elevated temperature, characterized in that 1-amino-2-chloro-4-hydroxyanthraquinone, in the form of an aqueous suspension, is reacted with the phenol, at a pH of 9 – 13 and at from 120° to 150° C, in the presence of a phase transfer catalyst, there being used as phase transfer catalyst

a) ammonium salts of the formula

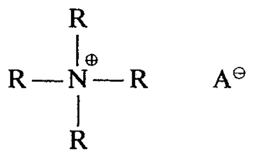

where at least one R is linear or branched $C_4-C_{20}$-Alkyl or $C_7-C_{10}$-phenylalkyl, the remaining R's are $C_1-C_4$-alkyl, and one of the remaining R's may also be phenyl, or $R_3N^{\oplus}$ is pyridinium, and $A^{\ominus}$ is one equivalent of an anion, or

b) ethylene oxide/propylene oxide block copolymers which are obtained

α) by reacting hydroxy compounds of the general formula $A(OH)_m$, where A is an m-valent aliphatic radical of 2 to 6 carbon atoms, OH is primary or secondary hydroxyl and m is from 2 to 4, with from 2 to 40 moles of propylene oxide per equivalent of hydroxyl and subsequent reaction with from 2 to 40 moles of ethylene oxide per equivalent of oxypropylation product, or

β) by reacting amines of the general formula

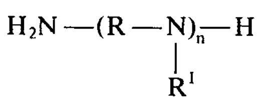

where R is saturated linear or branched $C_2-C_6$-alkylene, $R^1$ is hydrogen, methyl or phenyl and n is from 1 to 5, with from 2 to 40 moles of propylene oxide per equivalent of reactive amino hydrogen, followed by reaction with from 2 to 40 moles of ethylene oxide per equivalent of oxypropylation product, or

c) reaction products of $C_2-C_{20}$-alkylphenols, $C_{12}-C_{20}$-alkenylamines, $C_{12}-C_{20}$-alkylamines or $C_8-C_{20}$-alkanols with from 3 to 30 moles of ethylene oxide per mole of hydroxy compound or amino compound.

2. A process as claimed in calim 1, characterized in that the reaction is carried out in the presence of from 1 to 20% by weight, based on 1-amino-2-chloro-4-hydroxyanthraquinone, of (a), (b) or (c).

3. A process as claimed in claim 1 or 2, characterized in that the reaction is carried out at a pH of from 10 to 12.

4. A process as claimed in claim 1 or 2, characterized in that the reaction is carried out at a pH of from 11 to 12.

5. A process as claimed in claim 1, 2, 3 or 4, characterized in that the reaction is carried out at from 130° to 150° C.

6. A process as claimed in claims 1 to 5, characterized in that the reaction is carried out in the presence of a trimethylbenzylammonium, dimethylbenzylphenylammonium or cetyltrimethylammonium salt or of a reaction product of 4-nonylphenol with from 10 to 20 moles of ethylene oxide per mole of phenol, or of propylene glycol with from 25 to 35 moles of propylene oxide and then with from 15 to 25 moles of ethylene oxide per mole of glycol.

7. A process as claimed in claims 1 to 5, characterized in that the reaction is carried out in the presence of a reaction product of 1 mole of 4-nonylphenol with from 12 to 17 moles of ethylene oxide.

**Revendications**

1. Procédé pour la préparation de 1-amino-2-phénoxy-4-hydroxyanthraquinone, qui est éventuellement substituée dans le radical phénoxy par un chlore, un brome, un alcoyle à 1—4 C et/ou un alcoxy à 1—4 C, par réaction de 1-amino-2-halogéno-4-hydroxyanthraquinone avec le phénol correspondant en milieu aqueux-alcalin à la chaleur, caractérisé en ce qu'on fait réagir la 1-amino-2-chloro-4-hydroxyanthraquinone, sous forme d'une suspension aqueuse, à un pH compris entre 9 et 13 et à une température comprise entre 120 et 150°C, avec le phénol en présence d'un catalyseur de transfert de phase, en utilisant comme catalyseur de transfert de phase:

a) des sels d'ammonium de formule

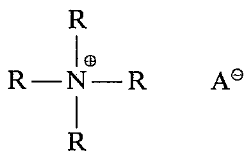

dans laquelle l'un au moins des symboles R représente un alcoyle à 4—20 C à chaine linéaire ou ramifiée ou un phénylalcoyle à 7—10 C, les autres symboles R représentent un alcoyle à 1—4 C, l'un de ces autres symboles R pouvant aussi représenter un phényle, ou $R_3N^{\oplus}$-représente le groupe pyridinium et $A^{\ominus}$ représente un équivalent d'un anion;

b) des coplymères séquencés d'oxyde d'éthylène et d'oxyde de propylène qui sont obtenus:

α) par réaction de composés hydroylés de formule générale $A(OH)_m$, dans laquelle A représente un radical aliphatique m-valent contenant 2 à 6 atomes de C, OH est un hydroxyle primaire ou secondaire et m = 2 à 4, avec 2 à 40 mol d'oxyde de propylène par équivalent d'hydroxyle, puis par réaction avec 2 à 40 mol d'oxyde d'éthylène par équivalent de produit d'oxypropylation, ou

β) par réaction d'amines de formule générale

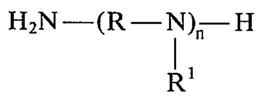

dans laquelle R représente un alcoylène saturé à 2—6 C à chaîne linéaire ou ramifiée, $R^1$ = hydrogène, méthyle ou phényle et n = 1 à 5, avec 2 à 40 mol d'oxyde de propyléne par équivalent d'hydrogène aminé réactif, puis par réaction avec 2 à 40 mol d'oxyde d'éthylène par équivalent de produit d'oxypropylation; ou

c) des produits de réaction d'alcoylphénols à 2—20 C, d'alcénylamines à 12—20 C, d'alcoylamines à 12—20 C ou d'alcanols à 8—20 C avec 3 à 30 mol d'oxyde d'éthylène par mol de composé hydroxy ou aminé.

2. Procédé selon la revendication 1, caractérisé en ce que la réaction est menée en présence de 1 à 20% en poids du catalyseur de transfert de phase a), b) ou c), par rapport à la 1-amino-2-chloro-4-hydroxyanthraquinone.

3. Procédé selon la revendication 1 ou 2, caractérisé en ce que la réaction est menée dans la gamme de pH comprise entre 10 et 12.

4. Procédé selon la revendication 1 ou 2, caractérisé en ce que la réaction est menée dans la gamme de pH comprise entre 11 et 12.

5. Procédé selon l'une quelconque des revendications 1 à 4, caractérisé en ce que la réaction est menée dans la gamme de température comprise entre 130 et 150°C.

6. Procédé selon l'une quelconque des revendications 1 à 5, caractérisé en ce que la réaction est menée en présence de sels de triméthylbenzylammonium, de diméthylbenzylphénylammonium, de cétyltriméthylammonium ou en présence de produits de réaction du 4-nonylphénol avec 10 à 20 mol d'oxyde d'éthylène par mol de phénol, ou du propylène-glycol avec 25 à 35 mol d'oxyde de propylène, puis avec 15 à 25 mol d'oxyde d'éthylène par mol de glycol.

7. Procédé selon l'une quelconque des revendications 1 à 5, caractérisé en ce que la réaction est menée en présence du produit de réaction de 4-nonylphénol avec l'oxyde d'éthylène (1 : 12 à 17 mol).